Europäisches Patentamt

European Patent Office

Office européen des brevets

(11) Publication number: **0 360 201**
**A2**

## (12) EUROPEAN PATENT APPLICATION

(21) Application number: **89117253.8**

(22) Date of filing: **18.09.89**

(51) Int. Cl.⁵: **B32B 27/36**

(30) Priority: **19.09.88 JP 233892/88**

(43) Date of publication of application:
**28.03.90 Bulletin 90/13**

(84) Designated Contracting States:
**DE FR GB**

(71) Applicant: **DIAFOIL COMPANY, LIMITED**
**3-2, Marunouchi 2-chome**
**Chiyoda-ku Tokyo(JP)**

(72) Inventor: **Otonari, Satoshi**
**1-13-6 Ogawa**
**Machida-shi Tokyo(JP)**
Inventor: **Sato, Yoshinori**
**2-10-2 Ogawa**
**Machida-shi Tokyo(JP)**
Inventor: **Masuda, Narihiro**
**2-6-3 Tachibanadai Midori-ku**
**Yokohama-shi Kanagawa-ken(JP)**
Inventor: **Akatsu, Kazuyuki**
**1195 Yawatanakayama**
**Nagahama-shi Shiga-ken(JP)**

(74) Representative: **TER MEER - MÜLLER -**
**STEINMEISTER & PARTNER**
**Mauerkircherstrasse 45**
**D-8000 München 80(DE)**

(54) **Laminated polyester film.**

(57) Disclosed herein is a laminated film comprising a polyester film containing minute closed cells and having a density of 0.40 to 1.30 g/cm³ and a polyester film having a density of more than 1.30 g/cm³ laminated on one side or both sides of the polyester film containing minute closed cells.

In the laminated film of the present invention, the surface smoothness, which is a serious defect of a conventional film containing a large number of minute closed cells, is improved and the ink adhesive property is also improved, thereby enhancing the printing suitability. The breakage during the stretching process of film formation is reduced and the film forming properties are improved. Thus, the productivity was enhanced, thereby enabling the film to be supplied to the market at a low cost. Application of the film to various fields is enabled and the industrial value of the film is very large.

## LAMINATED POLYESTER FILM

### BACKGROUND OF THE INVENTION

The present invention relates to a laminated polyester film. More particularly, the present invention relates to a white laminated polyester film containing minute closed cells so as to reduce the weight per unit volume and having excellent surface smoothness and adhesiveness.

Polyester film, in particular, polyethylene terephthalate films have hitherto been widely used in various industrial fields as a base material for information recording materials, capacitors, printing plates and packaging materials owing to their excellence in mechanical properties, electrical properties, resistance to chemicals, surface properties and so forth. By utilizing these excellent properties, for example, a white biaxially stretched polyester film having high opacifying properties has recently come to use as a substrate for an electronic white board used in offices and meeting rooms. A white polyester film is also used as a substrate for magnetic cards represented by prepaid cards and the range of use thereof will be increasingly enlarged hereafter.

Although these white films possess highly desirable properties, they suffer from various drawbacks because they contain a large amount of inorganic particles such as titanium dioxide for the purpose of enhancing the opacifying properties. For example, since the addition of the inorganic particles increases the density of the film by 20 to 50% in comparison with an ordinary polyester film and causes sagging of film with aging under the weight of its own gravity. In the case of the white board, for example, the phenomenon of sagging of the board surface with aging is greatly accelerated during a considerably short-term use, thereby seriously impairing the commercial value of the white board. Moreover, the large amount of inorganic particles contained in the white film greatly shorten the service life of a knife or injury to the hand by the film edge in the process of slitting the film or cutting a card. Thus, the white films containing such inorganic particles have problems in terms of productivity and handling properties.

The inventors of the present invention made a study in search of a way of decreasing the apparent specific gravity and consequently solving the various problems mentioned above. As a result, the present inventors proposed that the phenomenon of sagging of polyester film with aging under the weight of its own gravity should be largely eliminated by foaming the film and converting it into a minute-cellular film as proposed in Japanese Patent Application Laid-Open (KOKAI) No. 63-168441 (1988). The finely dispersed closed cells in the film play a part in imparting opacifying properties to the film and consequently decreasing the amount of inorganic particles to be added to the film and greatly lengthening the service life of the knife and appreciably eliminating the possibility of the hand being injured by the sharp film edges during the slitting process. Thus, the productivity has been enhanced and the improvement of the handling properties has been achieved.

Although the minute-cellular polyester film has attained such outstanding effects, it is not necessarily satisfactory in terms of the the surface properties of the film. It has been found that this film exhibits poor surface smoothness and adhesiveness as compared with the conventional white film, and the improvement thereof has strongly demanded. Furthermore, the minute-cellular film has not completely solved the problem in the productivity because the film is apt to be broken due to the internal pressure from cells during the stretching process using a tenter in the production of a minute-cellular polyester film.

As a result of the study undertaken by the present inventors so as to improve the surface properties, in particular, the surface smoothness and the adhesiveness of a minute-cellular polyester film with a view to the above-described present state of art, it has been found that the surface smoothness and the adhesiveness are greatly improved by reducing the amount of cells on the film surface. The present invention has been achieved on the basis of this finding.

### SUMMARY OF THE INVENTION

In an aspect of the present invention, there is provided a laminated film comprising a polyester film containing minute closed cells and having a density of 0.40 to 1.30 $g/cm^3$ and a polyester film having a density of more than 1.30 $g/cm^3$ which is laminated on one side or both sides of the polyester film containing minute closed cells.

## DETAILED DESCRIPTION OF THE INVENTION

The term "polyester" used in the present invention refers to a polyester which is produced by polycondensing an aromatic dicarboxylic acid such as terephthalic acid, isophthalic acid and naphthalene dicarboxylic acid or an ester thereof with a glycol component such as ethylene glycol, diethylene glycol, 1,4-butanediol and neopentyl glycol.

These polyesters are produced by direct reaction of an aromatic dicarboxylic acid with a glycol component. Alternatively, they may be produced by subjecting an alkyl ester of an aromatic dicarboxylic acid and a glycol component to ester exchange reaction and subsequently polycondensing the product of the ester exchange reaction, or by polycondensing a diglycol ester of an aromatic dicarboxylic acid.

Polyethylene terephthalate, polybutylene terephthalate and polyethylene-2,6-naphthalate can be cited as typical examples of the polyester. This polyester may be either a homopolymer or a copolyester resulting from copolymerization using a third comonomer. In any case, the polyester used in the present invention preferably contains not less than 70 mol%, more preferably not less than 80 mol%, and still more preferably not less than 90 mol% of ethylene terephthalate units, ethylene-2,6-naphthalate units or butylene terephthalate units as the constitutional repeating unit.

When the polyester has an unduly low degree of polymerization, the film produced has an insufficient mechanical strength. The polyester, therefore, is preferred to have an intrinsic viscosity of not less than 0.4, preferably 0.5 to 1.2, more preferably 0.55 to 0.85.

When a film is formed of a polyester, the polyester is ordinarily fabricated so as to contain an appropriate amount of fine particles which are inactive to the polyester as an agent for improving the slipping property between films or between the film and a metallic roll. The polyester to be used in the present invention, however, is preferred not to contain such fine inactive particles. This is because such fine inactive particles, when contained in the film, have a possibility of hindering the desired control of the color tone and the opacifying properties of the film obtained. Nevertheless, there is no problem in using a polyester containing these fine inactive particles so long as the fine inactive particles have no adverse effect on the color tone and the opacifying properties which the film obtained is required to have.

In the present invention, the film is produced by using the polyester defined above. The feature of the present invention lies in that on one side or both sides of a film layer (hereinunder referred to as "layer A") containing minute closed cells having a diameter of 3 to 300μm, a film layer (hereinunder referred to as "layer B") containing substantially no minute closes cells is laminated. More specifically, the layer A must have a density of 0.40 to 1.30 g/cm³, preferably 0.50 to 1.20 g/cm³, and the layer B must have a density of more than 1.30 g/cm³, preferably 1.35 to 1.50 g/cm³. If the density of the layer A exceeds 1.30 g/cm³, the content of the closed cells is so small that the effect of preventing the film from sagging under the weight of its own gravity with aging is no longer expected. On the other hand, if it is less than 0.40 g/cm³, the film produced is unfavorably deficient in mechanical strength. If the density of the layer B is less than 1.30 g/cm³, the surface smoothness of the laminated film is disadvantageously deteriorated.

The film according to the present invention is required to satisfy the above-described conditions. Furthermore, the thickness of the layer A is preferably in the range of 10 to 500 μm and the layer B is preferably in the range of 0.5 to 100 μm. In addition, the thickness of the layer A is preferably equal to or larger than that of the layer B. If the layer B is thicker than the layer A, the density of the laminated film is increased as a whole, so that the effect of preventing the film from sagging under the weight of its own gravity with aging is no longer exerted. On the other hand, if the thickness of the layer B is less than 0.5 μm, the improvement of the surface smoothness of the laminated film is unfavorably insufficient.

It is necessary that the polyester films of both layer A and layer B are stretched at least uniaxially. The stretch ratio is 4 to 25 times, preferably 9 to 20 times the original area (in the case of uniaxially stretching, the stretch ratio in the unstretched direction is assumed to be 1 time). Stretching is necessary because the polyester film in an unstretched state is deficient in mechanical strength as widely known.

The method to be employed for the production of the films for the layer A and the layer B is not specifically defined so long as the films satisfy these requirements. As examples of a method available for the production of the layer A containing minute cells, a method of adding a gas or a gasifiable substance as disclosed in Japanese Patent Application Laid-Open (KOKAI) No. 50-38765 (1975), Japanese Patent Publication No. 57-46456 (1982) and Japanese Patent Application Laid-Open (KOKAI) No. 57-34931 (1982); a method of adding a substance capable of generating a gas by chemical decomposition as disclosed in Japanese Patent Application Laid-Open (KOKAI) No. 52-43871 (1977) and Japanese Patent Publication No. 58-50625 (1983), and a method comprising the steps of mixing a material for a film with a substance soluble in a solvent, forming the resultant mixture in the form of a film, and impregnating the film in the solvent to extract the substance from the film as disclosed in Japanese Patent Application Laid-Open (KOKAI) No. 51-34963 (1976) and Japanese Patent Publication No. 52-27666 (1977) can be cited. Any of these methods can be employed optionally. These methods, however, are not necessarily said to be readily practicable methods, because they entail use of special molding machine or complicated production processes.

For the production of the minute-cellular polyester film according to the present invention, it is preferable to employ the methods formerly proposed by the present inventors as disclosed in Japanese Patent Application Laid-Open (KOKAI) Nos. 63-168441 (1988) and 63-193938 (1988), for example.

These are methods of producing a film by mixing a polyester with a specific polypropylene, extruding the resultant mixture in the form of a sheet and stretching the sheet at least uniaxially. Adoption of these methods facilitates the production of a polyester film (layer A) containing a large number of minute closed cells and having a density of 0.40 to 1.30 g/cm$^3$.

These methods will be explained in more detail. A polypropylene which is mixed with the polyester used in such methods is a crystalline polypropylene homopolymer comprising at least 95 mol%, preferably at least 98 mol% of propylene units. If the polypropylene used is amorphous, the amorphous sheet formed therefrom suffers from bleeding out of polypropylene to the surface of the sheet and unfavorably smears the surface of a cooling drum, a stretching roll, or the like. If the polypropylene contains more than 5 mol% of another units such as ethylene units incorporated by copolymerization, the stretched film finally obtained unfavorably fails to contain a sufficient amount of minute closed cells.

The melt flow index (hereinunder referred to as "M.F.I.") of the polypropylene is preferred to fall in the range of 0.2 to 120 g/10 min, preferably in the range of 0.5 to 50 g/10 min. If the M.F.I. is less than 0.2 g/10 min, the cells formed are so large that the sheet will frequently sustain breakage during the course of stretching. On the other hand, if the M.F.I. exceeds 120 g/10min, the sheet slips off the clips while being stretched with a tenter. Thus, any deviation of the M.F.I. from the defined range disadvantageously deteriorates the film-forming properties.

The amount of the polypropylene to be incorporated is preferred to fall in the range of 4 to 30 wt%, preferably 5 to 30 wt% based on the polyester. If this amount is less than 4 wt%, the content of minute cells produced is not sufficient, while if this amount exceeds 30 wt%, the molded sheet disadvantageously sustains breakage during the course of stretching. As described above, it is essential in this method that a specific polypropylene is mixed with a polyester.

In this method, it is another essential requirement that the molded sheet should be stretched at least uniaxially. This stretching process is employed not only for the purpose of imparting a sufficient mechanical strength to the film produced, as described above, but also because the impartation of minute closed cells to the sheet is not attained solely by the blending of the polyester with the polypropylene and it is attained only when the blending is combined with the work of stretching. The stretching process can be carried out under the same conditions as those used for the production of the conventional polyester film without requiring any special process.

More specifically, a raw material prepared by blending 3 to 40 wt% of a polypropylene having an M.F.I. of 0.2 to 120 g/10 min with a polyester is melted and extruded in the form of a sheet through a die of an extruding machine at 250°C to 300°C and then cooled to a temperature below about 70°C to obtain a substantially amorphous sheet. This sheet is then stretched in the machine and/or transverse direction by 4 to 25 times, preferably 9 to 20 times the original area (in the case of uniaxially stretching, the draw ratio in the unstretched direction is assumed to be 1 time) and further subjected to a heat treatment at 120°C to 250°C. Thus, a polyester film (layer A) according to the present invention which has a density of 0.40 to 1.30 g/cm$^3$ is produced.

As a method of producing a polyester (layer B) containing substantially no minute closed cells, a known method, e.g., a method disclosed in Japanese Patent Publication No. 30-5639 (1955) can be adopted. That is, is usable a method comprising melting and extruding an ordinary raw material for a polyester in the form of a sheet at 250°C to 320°C, cooling the sheet to a temperature of 40 to 80°C to solidify the sheet and obtain a substantially amorphous sheet, stretching the amorphous sheet in the machine and/or transverse direction by 4 to 25 times, preferably 9 to 20 times the original area and further subjecting it to a heat treatment at 120°C to 250°C.

In the present invention, the layer A and the layer B are laminated and a method of lamination is not specified. In order to improve the adhesiveness of the film surface, which is one of the objects of the present invention, The layer A and the layer B prepared separately from each other may be laminated through an adhesive layer. Alternatively, in the process of producing the layer A, the layer B may be melt extruded for lamination on the layer A. In consideration of the productivity, the method of laminating by coextrusion is more preferable. This is a method of melting a raw material for the layer A and a raw material for the layer B by the respective extruders and introducing both materials into one die and co-extruding the layer A and the layer B in a molten state in the form of a slit to obtain a laminated sheet. Adoption of this method is capable of eliminating the difference in thermal contraction between the layer A and the layer B, thereby preventing a trouble such as curling caused by the thermal history in the course of various processings. In addition, although the stretching process of the layer A solely involves a danger of breaking the film, by stretching the layer A together with the layer B it is possible to suppress the breakage of the film and, hence, to greatly enhance the productivity.

A manufacturing method using coextrusion particularly preferably used in the present invention will be explained in further more detail. As the raw material for the layer A, namely, the film layer containing minute closed cells and having a density of 0.40 to 1.30 g/cm$^3$, a blend of a polyester and 3 to 40 wt% of a specific polypropylene and as the raw material for the layer B, namely, the film layer containing substantially no closed cells and having a density of more than 1.30 g/cm$^3$, an ordinary polyester are used respectively, as described above. These raw materials are charged into the respective extruders and melted at 250 to 320°C. After the molten materials are supplied to one die through a pipe, the molten material for the layer B is laminated on one side or both sides of the layer A, extruded in the form of a slit in a molten state, and cooled to about not higher than 70°C to obtain a laminated sheet consisting of substantially amorphous layers A and B. The thus-obtained laminated sheet is stretched to 4 to 25 times, preferably 9 to 20 times the original area in the machine and/or transverse direction and thereafter heat treated at 120 to 250°C. This method facilitates the control of the thicknesses of the layer A and the layer B by varying the amount of extrusion of the respective extruder.

In the laminated film of the present invention produced in such a process as described above, the density of the laminated film is 0.50 to 1.37g/cm$^3$, preferably 0.70 to 1.35g/cm$^3$, the center-line averaged surface roughness (Ra) on the surface of the layer B is 0.05 to 1.0 μm, preferably 0.1 to 0.6 μm, and the air leakage index is 1000 to 10000 sec, preferably 2000 to 8000 sec.

Various additives may be further added in accordance with the purpose of use so long as the objects of the present invention are satisfied. Examples of the additives are antioxidant, antistatic agent, ultraviolet absorbent, dye, pigment, lubricant, matting agent, fluorescent whitening agent and surfactant. An appropriate amount of such additives may be added by a suitable method as occasion demands.

For the purpose of improving various properties in accordance with the purpose of use, for example, the surface properties such as the releasing properties, antistatic properties and slipping properties, it is possible to subject the film to various surface treatments.

As such surface treatments, there are, for example, a primer coating treatment, flaming treatment, solvent treatment, corona discharge treatment, plasma treatment, ion plating treatment, ultraviolet ray treatment, X-ray treatment and sand blast treatment. Such treatment may be provided on one side or both sides of the laminated film of the present invention to an appropriate degree at an appropriate time, as occasion demands. A plurality of these surface treatments may be selected. In the case of subjecting both solid of the film to surface treatment, the type of treatment may be either the same or different.

The present invention will now be described more precisely with reference to the following non-limitative examples. Various physical properties mentioned in the present invention were determined by the following methods.

(1) Film density (g/cm$^3$)

Five points were selected from any given part of the laminated film as a sample. The weight per unit volume was obtained for each sample and the average value thereof was considered as the density of the laminated film. The thicknesses of the layer A and the layer B at the cross section of the laminated film were then measured through a microscope. Thereafter, the layer B on the surface of the laminated film was cut by a microtome, and the weight per unit volume of each of the layers A and B was calculated as the density of the corresponding layer.

(2) Surface roughness, Ra (μm)

By the use of a surface roughness tester produced by Kosaka Kenkyusho, Ltd. and marketed under product code of "SE-3F", the determination was carried out in accordance with Japanese Industrial Standard (JIS) B-0601-1976. The conditions of determination were that 2 μm in probe diameter, 30 mg in probe contact pressure, 0.8 mm in cutoff value, and 2.5 mm in length of measurement. The determination was performed at twelve points on the film and ten values remaining after the largest and smallest values had been omitted were averaged. The average value was reported as the center-line averaged surface roughness Ra.

(3) Air leakage index (sec)

By the use of a Beck surface smoothness tester produced by Toyo Seiki Seisakusho, Ltd. and marketed under product code of "No. 165", the determination was carried out in accordance with JIS P-8119-1976. The larger the value is, the more smooth is the surface of the film. The determination was performed at three points on the film and the average value was regarded as the air leakage index.

(4) Evaluation of adhesive property to ink

On the surface of a film, a predetermined ink was solid-applied with a #8 bar coater and the ink layer was dried at 80°C for 2 minutes to form an ink printing layer. The sample thus prepared was left standing overnight at 23°C and 50% RH. Thereafter, what is called adhesive peeling off test was carried out in which an adhesive tape produced by Nichiban Company, Limited was applied to the surface of the ink printing layer and was peeled off instantaneously from one end. At this time, the adhesive strength between the ink printing layer and the film was visually rated on the following 5-level scale:
5: No ink printing layer has been peeled off the film.
4: A very small part of the ink printing layer has been peeled off the film.
3: A part of the ink printing layer has been peeled off the film.
2: Substantially all ink printing layer except a slight part has been peeled off the film.
1: The entire part of the ink printing layer has been peeled off the film.

(5) Evaluation of film-forming properties

The state in which the film was broken while the amorphous sheet was stretched in the transverse direction after it was stretched in the machine direction with a tenter. When the film was frequently broken at the stretching step or the heat-treatment, it was marked with x, and when almost no breakage occurred and the film had a good productivity, it was marked with O.

Example 1:

A raw material A′ prepared by uniformly mixing 20 wt% of crystalline polypropylene chips having an M.F.I. of 4.5 with polyethylene terephthalate chips having an intrinsic viscosity (hereinunder referred to as"-[$\eta$]") of 0.64 and a raw material B′ comprising polyethylene terephthalate chips having a [$\eta$] of 0.66 and 5% by weight of titanium dioxide particles having an average particle diameter of 0.3 μm were melted at 290°C by respective extruders. The molten materials were introduced to a die and coextruded onto a cooling drum at 40°C in the form of a slit of a laminate such that the raw material B′ constituted outer layers and the raw material A′ an intermediate layer therebetween, thereby obtaining an unstretched three-layered laminated sheet of about 0.6 mm thick. This sheet was then stretched in the machine direction by 3 times at 95°C and in the transverse direction by 3.2 times at 110°C and subjected to a heat treatment at 220°C for 5 seconds, to produce a white laminated polyester film having a thickness of 100 μm and a density of 0.82 g·cm³. The film obtained had an intermediate layer (layer A) having a thickness of 90 μm, a density of 0.75 g·cm³ and containing a large number of minute closed cells and outer layers (layers B) each having a thickness of 5 μm and a density of 1.42 g/cm³.

The Ra of the laminated film was 0.37 μm and the air leakage index was 4100 sec, which fact shows that this film is more excellent in the surface smoothness than the film obtained in Comparative Example 1 which will be described later. The ink adhesive property of this film was found to be improved and the evaluations were 5 for the polyester grade ink, 3 for the cellocolor ink and 2 for the UV screen ink.

Thus, the film obtained in Example 1 was not only excellent in the surface properties and the adhesiveness in comparison with the film obtained in Comparative Example 1 but also caused substantially no breakage during film formation, indicating a very improved productivity.

6

Example 2 :

A three-layered laminated film was formed in the same way as in Example 1 except that the amount of polypropylene mixed in the raw material A' was changed to 10 wt% and polyethylene terephthalate copolymerized with 5 mol% of isophthalic acid and having a $[\eta]$ of 0.67 was used as the raw material B'. In this three-layered laminated polyester film, the layer A was 44 $\mu$m in thickness and 0.95 g/cm$^3$ in density, the layers B each were 3 $\mu$m in thickness and 1.39 g/cm$^3$ in density, and the total film thickness was 50 $\mu$m. The Ra of the laminated film was 0.30 $\mu$m, the air leakage index was 5900 sec, and the ink adhesive property of this film was 5 for the polyester grade ink, 5 for the cellocolor ink and 3 for the UV screen ink. Thus, the film was excellent in the surface smoothness and the adhesiveness.

Example 3:

A three-layered laminated film was formed in the same way as in Example 1 except that the amount of polypropylene mixed in the raw material A' was changed to 25 wt% and polyethylene terephthalate containing 5 wt% of barium sulfate having an average particle diameter of 0.6 $\mu$m and having a $[\eta]$ of 0.62 was used as the raw material B'. In this three-layered laminated polyester film, the layer A was 230 $\mu$m in thickness and 0.68 g/cm$^3$ in density, the layers B each were 35 $\mu$m in thickness and 1.39 g/cm$^3$ in density, and the total film thickness was 300 $\mu$m. The Ra of the laminated film was 0.25 $\mu$m, the air leakage index was 5200 sec, and the ink adhesive property of this film was the same as in Example 1. Thus, the film was as excellent as the film in Example 1 in the surface smoothness and the adhesiveness.

Example 4:

A two-layered laminated film was formed in the same way as in Example 1 except that an unstretched two-layered laminated sheet was obtained from the coextrusion of the same raw materials A' and B'. In this two-layered laminated film, the layer A was 6 $\mu$m in thickness and 0.73 g/cm$^3$ in density, the layer B was 6 $\mu$m in thickness and 1.42 g/cm$^3$ in density, and the total film thickness was 12 $\mu$m. The Ra of the B layer of the laminated film was 0.42 $\mu$m, the air leakage index was 4500 sec, and the ink adhesive property of this film was as good as in Example 1.

Comparative Example 1:

In place of the coextrusion of the raw materials A' and B' carried out in Example 1, a film of a single layer of the raw material A' was formed in the same way as in Example 1. Finally, a white polyester film consisting of the layer A which contained a large number of minute closed cells and had a thickness of 100 $\mu$m and a density of 0.75 g/cm$^3$ was obtained. The Ra of the laminated film was 0.78 $\mu$m, the air leakage index was 950 sec, and the ink adhesive property of this film was 2 for the polyester grade ink and 1 both for the cellocolor ink and for the UV screen ink.

Thus, this film was inferior both in the surface smoothness and the adhesiveness.

Comparative Example 2:

A film was formed in the same way as in Example 1 except that the amount of polypropylene mixed in the raw material A' was changed to 3 wt%. Finally, a three-layered laminated polyester film in which the layer A was 8 $\mu$m in thickness and 1.32 g/cm$^3$ in density, the layers B each were 21 $\mu$m in thickness and 1.43 g/cm$^3$ in density, and the total film thickness was 50 $\mu$m was obtained. The Ra of the laminated film was 0.17 $\mu$m, the air leakage index was 7200 sec. Thus, the film had an excellent surface roughness, but since the density of the layer A was as large as 1.32 g/cm$^3$, the density of the film as a whole was 1.41 g/cm$^3$, thereby making the reduction in weight of the film impossible.

Comparative Example 3:

7

The same procedure as in Example 1 except that the amount of polypropylene mixed in the raw material A' was changed to 35 wt% and a polyethylene terephthalate of a $[\eta]$ of 0.63 containing 10 wt% of titanium dioxide was used as the raw material B' was repeated in order to obtain a three-layered laminated polyester film in which the layer A was 90 $\mu$m in thickness and 0.37 g/cm$^3$ in density, the layers B each were 5 $\mu$m in thickness and 1.44 g/cm$^3$ in density, and the total film thickness was 100 $\mu$m, but the breakage during the stretching process could not be eliminated and the productivity was extremely inferior.

Comparative Example 4:

A film was formed in the same way as in Example 1 except that polyethylene terephthalate of a $[\eta]$ of 0.62 containing 5 wt% of a crystalline polypropylene having an M.F.I. of 10 g/10 min was used as the raw material B'. Finally, a three-layered laminated polyester film in which the layer A was 80 $\mu$m in thickness and 0.72 g/cm$^3$ in density, the layers B each were 110 $\mu$m in thickness and 1.23 g/cm$^3$ in density, and the total film thickness was 300 $\mu$m was obtained. The Ra of the laminated film was 0.53 $\mu$m and the air leakage index was 1300 sec. Thus, not only were the surface properties not improved but the adhesiveness was as inferior as in Comparative Example 1.

The results of the evaluation of the properties of the films obtained in Examples 1 to 4 and Comparative Examples 1 to 4 are collectively shown in Table 1.

8 .

Table 1

| Example and Comparative Example | Film structure | | | | Density of entire film (g/cm³) | Film properties | | | | | Film-forming property |
|---|---|---|---|---|---|---|---|---|---|---|---|
| | Layer A | | Layer B | | | Surface properties | | Ink adhesive property | | | |
| | Density (g/cm³) | Thickness (μm) | Density (g/cm³) | Thickness (μm) | | Ra(μm) | Air leakage index (sec) | Polyester grade ink | Cellocolor ink | UV screen ink | |
| Example | | | | | | | | | | | |
| 1 | 0.75 | 90 | 1.42 | 5 | 0.82 | 0.37 | 4100 | 5 | 3 | 2 | ○ |
| 2 | 0.95 | 44 | 1.39 | 3 | 1.00 | 0.30 | 5900 | 5 | 5 | 3 | ○ |
| 3 | 0.68 | 230 | 1.39 | 35 | 0.85 | 0.25 | 5200 | 5 | 3 | 2 | ○ |
| 4 | 0.73 | 6 | 1.42 | 6 | 1.08 | 0.42* | 4500 | 5 | 3 | 2 | △ |
| Comparative Example | | | | | | | | | | | |
| 1 | 0.75 | 100 | - | - | 0.75 | 0.78 | 950 | 2 | 1 | 1 | △ |
| 2 | 1.32 | 8 | 1.43 | 21 | 1.41 | 0.17 | 7200 | 5 | 3 | 2 | ○ |
| 3 | 0.37 | 90 | 1.44 | 5 | - | - | - | - | - | - | x |
| 4 | 0.72 | 80 | 1.23 | 110 | 1.10 | 0.53 | 1300 | 2 | 1 | 1 | ○ |

* Ra on the surface of layer B

## Claims

1. A laminated film comprising a uniaxially or biaxially stretched polyester film containing minute closed cells and having a density of 0.40 to 1.30 g/cm$^3$ and a uniaxially or biaxially stretched polyester film having a density of more than 1.30 g/cm$^3$ laminated on one side or both sides of said polyester film containing minute closed cells.

2. A laminated film according to claim 1, wherein said polyester film having a density of 0.40 to 1.30 g cm$^3$ comprises a polyester and 3 to 40 wt% of a crystalline polypropylene based on said polyester.

3. A laminated film according to claim 2, wherein said polypropylene have a melt flow index of 0.2 to 120 g 10 min.

4. A laminated film according to claim 1, wherein the density of said laminated film is 0.50 to 1.37 g cm$^3$.

5. A laminated film according to claim 1, wherein the air leakage index of said laminated film is 1000 to 10000 sec.

6. A laminated film according to claim 1, wherein the center-line averaged surface roughness on the surface of said polyester film having a density of more than 1.30 g/cm$^3$ is 0.05 to 1.0 μm.

10